# EUROPÄISCHE PATENTANMELDUNG

(11) **EP 1 908 508 A1**
(43) Veröffentlichungstag der Anmeldung: **09.04.2008**
(21) Anmeldenummer: 07018294.4
(22) Anmeldetag: 18.09.2007
(51) Int. Cl.: B01D 61/14, B01D 63/16, B41F 7/24, B01D 33/15

(54) **Verfahren zur Reinigung eines Prozessfluids für den Offset-Druck mittels Querstromfiltration, sowie Filtriervorrichtung für ein Prozessfluid**

(30) Priorität: 20.09.2006 DE 102006044726
(71) Anmelder: Technotrans AG, 48336 Sassenberg (DE)
(72) Erfinder: Holtwick, Robert, 48291 Telgte (DE); Walczyk, Christian, 48155 Münster (DE)
(74) Vertreter: Steinmeister, Helmut

(57) **Zusammenfassung**

Verfahren zur Reinigung eines Prozeßfluid für den Offset-Druck mittels Querstromfiltration, bei welchem das zu reinigende Prozeßfluid über die Oberfläche (28) einer Querstromfiltrationsmembran (18) hinweg strömt, wobei die Strömung zumindest teilweise durch eine Bewegung der Querstromfiltrationsmembran (18) durch das Prozeßfluid erzeugt wird.

## Beschreibung

Die vorliegende Erfindung betrifft ein Verfahren zur Reinigung eines Prozeßfluids für den Offset-Druck mittels Querstromfiltration, bei welchem das zu reinigende Prozeßfluid über die Oberfläche einer Querstromfiltrationsmembran hinweg strömt, sowie ferner eine entsprechende Filtriervorrichtung.

Beim Offset-Druck werden die Oberflächen der Druckplatten gleichmäßig mit einem Feuchtmittel benetzt, welches die Annahme von Druckfarbe an den nicht-druckenden Stellen der Druckplatte verhindert. Üblicherweise besteht ein solches Feuchtmittel aus Wasser und einer Reihe von Zusätzen, die insbesondere Alkohol sowie antikorrosive und antimikrobielle Stoffe, oberflächenaktive Substanzen oder dergleichen umfassen. Aufgrund der Flüchtigkeit des Alkohols ist das Feuchtmittel kühl zu halten. Gewöhnlich zirkuliert das Feuchtmittel in einem Kreislauf zwischen der Druckmaschine und einer Aufbereitungsanlage, in der es gereinigt wird und in welcher beim Betrieb der Druckmaschine auftretende Verluste durch die Zuführung von frischem Feuchtmittel ergänzt werden können.

Zum Ausfiltern von Verunreinigungen kann die Querstromfiltration verwendet werden, bei welcher das zu reinigende Prozeßfluid, wie insbesondere das Feuchtmittel, über eine Filtermembran hinweg strömt und durch diese hindurch auf die Permeatseite dringt, von wo aus das gereinigte Feuchtmittel als Filtrat abgefördert werden kann. Hierbei muß das Feuchtmittel ständig mit hoher Strömungsgeschwindigkeit über die Oberfläche der Membran strömen. Zu diesem Zweck wurden bisher Pumpen verwendet, die das Feuchtmittel der Membran mit hoher Geschwindigkeit züfördern. Die Pumpe muß dazu eine hohe Leistung aufbringen, was wiederum zu einer starken Erwärmung führt. Diese Abwärme wird in den Feuchtmittelkreislauf eingetragen und führt zu einer unerwünschten Verdunstung der flüchtigen Bestandteile des Feuchtmittels. Es kann auch der Fall eintreten, dass Komponenten des Feuchtmittels durch die Erhitzung sowie gegebenenfalls auch durch den von der Pumpe erzeugten Druck zersetzt werden. Schließlich kann durch die Erzeugung von Alkoholdämpfen eine Explosionsgefahr von der Filtrationsanlage ausgehen.

Aufgabe der vorliegenden Erfindung ist es daher, ein Verfahren zur Reinigung eines Prozeßfluids unter Verwendung von Querstromfiltration zu schaffen, bei welchem eine übermäßige Erwärmung des Prozeßfluids vermieden wird und seine Zusammensetzung nicht beeinträchtigt wird. Insbesondere soll das Verdampfen flüchtiger Bestandteile vermieden werden. Eine weitere Aufgabe besteht in der Schaffung einer entsprechenden Filtriervorrichtung zur Erreichung der vorstehend genannten Ziele.

Diese Aufgaben werden erfindungsgemäß durch das Reinigungsverfahren gemäß Anspruch 1 sowie durch die Filtriervorrichtung gemäß Anspruch 7 gelöst.

Bei dem erfindungsgemäßen Verfahren wird eine Strömung über die Oberfläche der Querstromfiltrationsmembran hinweg erzeugt, indem die Membran selbst durch das Prozeßfluid, also beispielsweise durch das Feuchtmittel, hindurch bewegt wird. Diese Bewegung kann mit einer hohen Geschwindigkeit erfolgen, so dass die erforderliche Strömungsgeschwindigkeit an der Oberfläche der Membran erreicht wird, die eine Ablagerung von Feststoffen verhindert und zu einer ausreichenden Filtrationsleistung führt. Die Überströmung wird also nicht durch die Pumpe erzeugt, und es wird keine zusätzliche Abwärme in den Prozeßfluid-Kreislauf eingetragen. Das Prozeßfluid kann kühl gehalten werden, so dass die eingangs beschriebenen Probleme vermieden werden, die bei einer Prozeßfluid-Erwärmung auftreten. Die erfindungsgemäße Filtriervorrichtung umfaßt Antriebsmittel für die Membran, die vom Prozeßfluidkreislauf thermisch weitgehend entkoppelt sein können und somit keine Probleme bezüglich der Wärmeerzeugung verursachen.

Vorzugsweise handelt es sich bei dem Prozeßfluid um ein Feuchtmittel.

In einer bevorzugten Ausführungsform des erfindungsgemäßen Verfahrens umfaßt die Bewegung eine Rotation der Querstromfiltrationsmembran, deren Rotationsachse senkrecht zur Oberfläche der Membran steht.

Vorzugsweise ist diese Rotationsbewegung eine oszillierende Bewegung um die Rotationsebene.

Weiter vorzugsweise kann die Bewegung eine oszillierende Linearbewegung der Membran umfassen.

In einer weiteren bevorzugten Ausführungsform wird ein Anteil der Strömung ergänzend durch eine Pumpe erzeugt, die das zu reinigende Prozeßfluid der Querstromfiltrationsmembran zufördert. Diese Pumpe kann mit einer niedrigen Förderleistung arbeiten, da der für das Erreichen der notwendigen Überströmungsgeschwindigkeit erforderliche Strömungsanteil durch die Bewegung der Membran selbst erzeugt wird. Die Pumpe erzeugt also keine nennenswerte Abwärme.

Vorteilhafte Ausgestaltungen der erfindungsgemäßen Filtriervorrichtung ergeben sich aus den Unteransprüchen 8 bis 14.

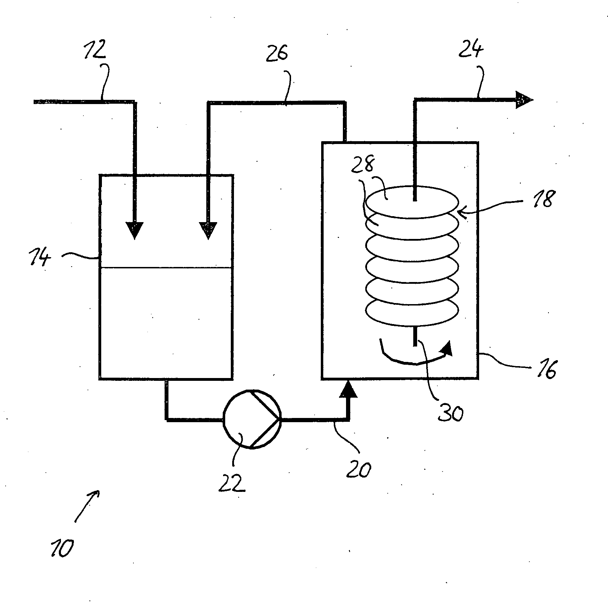

Im folgenden wird ein bevorzugtes Ausführungsbeispiel der Erfindung anhand der beigefügten Zeichnung näher erläutert.

Die einzige Figur zeigt eine schematische Darstellung einer bevorzugten Ausführungsform einer Filtriervorrichtung zur Durchführung des erfindungsgemäßen Verfahrens.

Die Filtriervorrichtung 10 dient zur Reinigung eines Feuchtmittels für den Offset-Druck, das in einem Kreislauf zwischen einer nicht dargestellten Druckmaschine und eine Peripheriegerät geführt wird, das zur erneuten Aufbereitung und zur Reinigung des Feuchtmittels dient. Die Filtriervorrichtung 10 kann in dieses Peripheriegerät integriert sein. Das verunreinigte Feuchtmittel fließt über einen Zulauf 12 in einen Sammeltank 14, in welchem es zunächst gespeichert und für den Filtriervorgang vorgehalten wird. Die Filtrierung findet in einem Filtrationsbehälter 16 statt, in welchem eine Querstromfiltrationsmembran 18 angeordnet ist. Vom Sammeltank 14 führt ein Zulauf 20 zum Filtrationsbehälter 16. Innerhalb des Zulaufs 20 ist eine Pumpe 22 angeordnet, die das zu reinigende Feuchtmittel vom Sammeltank 14 unter Druck in den Filtrationsbehälter 16 fördert. Das durch die Querstromfiltrationsmembran 18 gefilterte Feuchtmittel, das heißt, das Filtrat, wird an der Permeatseite der Querstromfiltrationsmembran durch einen ersten Ablauf 24 abgeführt und kann erneut der Druckmaschine zugeführt werden. Vom Filtrationsbehälter 16 führt ferner ein zweiter Ablauf 26 zurück in den Sammeltank 14. Da aufgrund der begrenzten Kapazität der Querstromfiltrationsmembran 18 nur ein verhältnismäßig geringer Anteil des von der Pumpe 22 in den Filtrationsbehälter 16 geförderten Feuchtmittels gereinigt und über den ersten Ablauf 24 als Filtrat abgefördert wird, fließt der überschüssige Anteil über den zweiten Ablauf 26 in den Sammeltank 14 zurück.

Das Verfahren der Querstromfiltration ist als solches bekannt. Das Feuchtmittel überströmt die Oberfläche der Querstromfiltrationsmembran 18 mit hoher Geschwindigkeit, so dass ein Absetzen von Feststoffen und damit die Blockierung der Membran verhindert wird. Durch den Flüssigkeitsdruck durchdringt das Feuchtmittel die Membran und wird, wie bereits beschrieben, an der Permeatseite abgefördert. Im hier vorliegenden Fall weist die Querstromfiltrationsmembran 18 eine Anzahl paralleler scheibenförmiger Oberflächen 28 auf, die vom Feuchtmittel in einer Querströmung überströmt werden.

Zur Durchführung dieses Verfahrens sind hohe Überströmungsgeschwindigkeiten an den Oberflächen 28 der Membran 18 erforderlich. Diese hohen Geschwindigkeiten werden erfindungsgemäß durch eine Bewegung der Querstromfiltrationsmembran 18 durch das Feuchtmittel erzeugt, das sich im Filtrationsbehälter 16 befindet. Im hier dargestellten Ausführungsbeispiel ist diese Bewegung eine Rotation der Querstromfiltrationsmembran 18 um eine Rotationsachse 30, die senkrecht zu den scheibenförmigen Oberflächen 28 der Membran 18 steht. Ein geeigneter Antrieb, der hier der Übersichtlichkeit halber nicht dargestellt ist, kann an einem Achsende vorgesehen sein und die Membran 18 zur Drehung antreiben.

Während im hier dargestellten Fall die hohe Strömungsgeschwindigkeit durch die schnelle Rotation der Oberflächen 28 durch das Feuchtmittel hindurch erzeugt wird, kann die Membran 18 sich auch auf andere Weise bewegen, beispielsweise in einer oszillierenden Linearbewegung, bei welcher die Oberflächen 28 im Feuchtmittel hin und her bewegt werden. Hierzu wäre ein Linearantrieb vorzusehen. Auch eine oszillierende Rotationsbewegung um die Rotationsachse 30 sowie Kombinationen aus Rotations- und Linearbewegungen sind durchführbar.

Gegenüber dem Stand der Technik wird die hohe Strömungsgeschwindigkeit nicht durch die Pumpe 22 erzeugt, die hier hauptsächlich die Funktion des Zuförderns des zu reinigenden Feuchtmittels in den Filtrationsbehälter 16 hat. Es tritt daher hier nicht das Problem auf, dass durch die hohe Pumpenleistung, die zur Erreichung der hohen Strömungsgeschwindigkeiten bisher erforderlich war, ein Wärmeeintrag in das Feuchtmittel erfolgt und dieses übermäßig erwärmt wird, was zu einem Ausdunsten des Alkoholanteils, einer Zersetzung wärmeempfindlicher Feuchtmittel-Komponenten, usw. führen kann. In der erfindungsgemäßen Filtriervorrichtung 10 kann das Feuchtmittel in gekühltem Zustand filtriert werden, ohne dass es bei diesem Vorgang nennenswert erwärmt wird. Optional kann im Sammeltank 14 eine zusätzliche Fülleinrichtung für das Feuchtmittel vorgesehen sein, wie etwa eine Kühlschlange.

Die Pumpe 22 kann ergänzend zu der Strömung über die Querstromfiltrationsmembran 18 beitragen. Dieser Beitrag ist jedoch so weit zu begrenzen, dass durch die aufgebrachte Pumpleistung kein Wärmeeintrag erfolgt, so dass die resultierende Überströmungsgeschwindigkeit hauptsächlich durch die Bewegung der Querstromfiltrationsmembran 18 erzeugt wird und der Anteil der Pumpe 22 daran relativ klein ist.

Während sich die vorliegende Beschreibung auf eine erfindungsgemäße Filtriervorrichtung für ein Feuchtmittel sowie auf ein entsprechendes Verfahren bezieht, läßt sich die vorliegende Erfindung in gleicher Weise zur Reinigung eines anderen Prozeßfluids für den Offset-Druck verwenden.

## Patentansprüche

1. Verfahren zur Reinigung eines Prozeßfluids für den Offset-Druck mittels Querstromfiltration, bei welchem das zu reinigende Prozeßfluid über die Oberfläche (28) einer Querstromfiltrationsmembran (18) hinweg strömt, wobei die Strömung zumindest teilweise durch eine Bewegung der Querstromfiltrationsmembran (18) durch das Prozeßfluid erzeugt wird.

2. Verfahren gemäß Anspruch 1, **dadurch gekennzeichnet, dass** das Prozeßfluid ein Feuchtmittel ist.

3. Verfahren gemäß Anspruch 1 oder 2, **dadurch gekennzeichnet, dass** die Bewegung eine Rotationsbewegung der Querstromfiltrationsmembran (18) umfaßt, deren Rotationsachse (30) senkrecht zur Oberfläche der Membran (18) steht.

4. Verfahren gemäß Anspruch 3, **dadurch gekennzeichnet, dass** die Rotationsbewegung eine oszillierende Bewegung der Querstromfiltrationsmembran (18) um die Rotationsachse (30) ist.

5. Verfahren gemäß einem der Ansprüche 1 bis 4, **dadurch gekennzeichnet, dass** die Bewegung eine oszillierende Linearbewegung der Querstromfiltrationsmembran (18) umfaßt.

6. Verfahren gemäß einem der vorhergehenden Ansprüche, **dadurch gekennzeichnet, dass** die Strömung ergänzend durch eine Pumpe (22) erzeugt wird, die das zu reinigende Prozeßfluid der Querstromfiltrationsmembran (18) zufördert.

7. Filtriervorrichtung für ein Prozeßfluid für den Offset-Druck, umfassend eine Querstromfiltrationsmembran (18) und Mittel zur Erzeugung einer Strömung über die Oberfläche (28) der Querstromfiltrationsmembran (18), **dadurch gekennzeichnet, dass** die Mittel zumindest einen Antrieb zur Bewegung der Querstromfiltrationsmembran (18) durch das Prozeßfluid umfassen.

8. Filtriervorrichtung nach Anspruch 7, **dadurch gekennzeichnet, dass** die Filtriervorrichtung zur Filtrierung eines Feuchtmittels vorgesehen ist.

9. Filtriervorrichtung nach Anspruch 7 oder 8, **dadurch gekennzeichnet, dass** die Mittel einen Rotationsantrieb umfassen, dessen Rotationsachse (30) senkrecht zur Oberfläche der Membran (18) steht.

10. Filtriervorrichtung nach einem der Ansprüche 7 oder 9, **dadurch gekennzeichnet, dass** die Mittel einen Linearantrieb umfassen.

11. Filtriervorrichtung nach einem der Ansprüche 7 bis 10, **dadurch gekennzeichnet, dass** der Antrieb dazu vorgesehen ist, die Membran (18) zu einer oszillierenden Bewegung anzutreiben.

12. Filtriervorrichtung nach einem der Ansprüche 7 bis 11, **dadurch gekennzeichnet, dass** die Mittel ferner eine Pumpe (22) umfassen, die das zu reinigende Prozeßfluid der Querstromfiltrationsmembran (18) zufördert.

13. Filtriervorrichtung nach nach einem der Ansprüche 7 bis 12, **gekennzeichnet durch** einen Sammeltank (14) zum Vorhalten ungereinigten Prozeßfluids, einen Filtrationsbehälter (16), in welchem die Querstromfiltrationsmembran (18) angeordnet ist, einen vom Sammeltank (14) ausgehenden Zulauf (20) zum Filtrationsbehälter (16), in welchem die Pumpe (22) angeordnet ist, einen an der Permeatseite der Membran (18) angeschlossenen ersten Ablauf (24) zur Abführung des Filtrats und einen zweiten Ablauf (26) zur Rückführung ungereinigten Prozeßfluids in den Sammeltank (14).

14. Filtriervorrichtung nach Anspruch 13, **dadurch gekennzeichnet, dass** der Sammeltank (14) eine Kühleinrichtung für das vorgehaltene Prozeßfluid umfaßt.
